(19) Europäisches Patentamt
European Patent Office
Office européen des brevets

(11) **EP 2 580 440 B1**

(12) **EUROPÄISCHE PATENTSCHRIFT**

(45) Veröffentlichungstag und Bekanntmachung des Hinweises auf die Patenterteilung:
**25.11.2015 Patentblatt 2015/48**

(21) Anmeldenummer: **11721328.0**

(22) Anmeldetag: **25.05.2011**

(51) Int Cl.:
***F01N 3/28*** (2006.01)

(86) Internationale Anmeldenummer:
**PCT/EP2011/058546**

(87) Internationale Veröffentlichungsnummer:
**WO 2011/154254 (15.12.2011 Gazette 2011/50)**

(54) **ABGASBEHANDLUNGSVORRICHTUNG**

EXHAUST GAS TREATMENT APPARATUS

DISPOSITF DE TRAITEMENT DE GAZ D'ECHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2010 DE 102010023323**

(43) Veröffentlichungstag der Anmeldung:
**17.04.2013 Patentblatt 2013/16**

(73) Patentinhaber:
• **Emitec Gesellschaft für Emissionstechnologie mbH**
**53797 Lohmar (DE)**
• **Dif Die Ideenfabrik GmbH**
**88069 Tettnang (DE)**

(72) Erfinder:
• **DANCKERT, Bernd**
**88074 Meckenbeuren (DE)**
• **VOGEL, Samuel**
**88339 Bad Waldsee (DE)**

(74) Vertreter: **KNH Patentanwälte**
**Kahlhöfer Neumann Rößler Heine PartG mbB**
**Postfach 10 33 63**
**40024 Düsseldorf (DE)**

(56) Entgegenhaltungen:
**WO-A1-2010/032645    GB-A- 2 346 413**
**US-A- 3 968 854    US-A1- 2003 051 449**
**US-A1- 2005 223 703**

EP 2 580 440 B1

**Beschreibung**

Die Erfindung betrifft eine Abgasbehandlungsvorrichtung mit welcher die Abgase einer Verbrennungskraftmaschine gereinigt werden können. Insbesondere betrifft die Erfindung eine Abgasbehandlungsvorrichtung für den so genannten Off-Highway-Bereich, also z. B. eine Abgasbehandlungsvorrichtung für ein Wasserfahrzeug oder ein Schienenfahrzeug.

Auch in diesen technischen Gebieten wird die Reinigung der Abgase von Verbrennungskraftmaschinen immer wichtiger. Im Bereich der Dieselmotoren, und insbesondere der unter Sauerstoffüberschuss betriebenen Dieselmotoren, kann die Abgasreinigung zumeist nur mit Hilfe moderner Abgasnachbehandlungstechnik realisiert werden. Beispielsweise wird zur effizienten Abgasreinigung hier auch das Verfahren der selektiven katalytischen Reduktion (SCR = selective catalytic reduction) angewendet, bei welchem dem Abgas ein Reduktionsmittel zur Reduktion von Stickstoffoxidverbindungen im Abgas zugeführt wird.

Im Gegensatz zum Kraftfahrzeugmarkt, welcher durch hohe Stückzahlen und damit Großserienlösungen geprägt ist, werden im Off-Highway-Bereich, und insbesondere in dem Markt für Wasserfahrzeuge, vielfach individuelle, maßgeschneiderte Lösungen verlangt, weil die Stückzahlen erheblich geringer sind. Aus diesem Grund sind flexible Lösungen zur Reinigung der Abgase von Verbrennungskraftmaschinen für derartige Anwendungen besonders wichtig.

Die in Wasserfahrzeugen und insbesondere Yachten verwendeten Motorleistungen weisen ein sehr großes Spektrum auf. Die Motorleistungen reichen zum Beispiel von ca. 250 kW [Kilowatt] bei Yachten mit ca. 10 m Länge bis hin zu Motorleistungen von weit mehr als 1.000 kW [Kilowatt] bei Yachten von bis zu mehr als 100 m Länge. Die Ausgestaltung und Form der Motorräume derartiger Wasserfahrzeuge variiert sogar bei demselben Modell oft von Fahrzeug zu Fahrzeug, weil vielfach individueller Bedürfnisse der Käufer berücksichtigt werden müssen. Davon ist auch die Entwicklung der Abgasreinigungsanlagen betroffen, die sich an die jeweiligen Bedingungen anpassen muss. Daher wird auch dazu übergegangen, modular aufgebaute Katalysatorsysteme einzusetzen, deren Applikation für ein bestimmtes Wasserfahrzeug schnell und ohne große zusätzliche Entwicklungsarbeit durchgeführt werden kann.

Bei Einbauten in Maschinenräume von Wasserfahrzeugen müssen zum Teil sehr niedrige Oberflächentemperaturen eingehalten werden. Die Rümpfe von Wasserfahrzeugen sind teilweise aus GFK-Strukturen (glasfaserverstärkte Kunststoffe) oder CFK-Strukturen (kohlefaserverstärkte Kunststoffe) aufgebaut. Derartige Materialien können schon durch Temperaturen ab 120 °C irreparabel geschädigt werden, weil bestimmte Lösungsmittel in diesen Materialien bei derartigen Temperaturen ausdampfen. Bei Abgasbehandlungsvorrichtungen für Wasserfahrzeuge wie insbesondere Yachten ist daher eine besonders sichere Isolierung von heißen Bauteilen erforderlich. Des Weiteren muss für ausreichend Durchlüftung des Maschinenraumes und Umlüftung der gesamten Anlage gesorgt werden, ohne dass Hitzezentren zwischen Abgasanlage und Rumpf entstehen.

Aus der US 2003/051449 A1 ist ist ein Abgasreinigunssystem bekannt, welches eine Einlasskammer aufweist durch die sich ein Einlassrohr erstreckt. Das Einlassrohr hat eine Vielzahl von Öffnungen durch welche Abgas aus dem Einlassrohr in die Einlasskammer übertreten kann. Die Öffnungen sind über den Umfang des Einlassrohres und über die Länge des Einlassrohres verteilt angeordnet. Zur Anpassung der Strömung, die durch die Öffnungen von dem Einströmrohr in die Einströmkammer übertritt, sind in dem Einströmrohr Widerstandsplatten angeordnet, die die Strömung des Abgases in dem Einströmrohr beeinflussen.

Ausgehend von dieser Ausgangssituation ist es Aufgabe der hier vorliegenden Erfindung, die geschilderten Probleme des Standes der Technik zumindest teilweise zu lösen. Insbesondere soll eine Abgasbehandlungsvorrichtung beschrieben werden, die für ein Wasserfahrzeug besonders geeignet ist. Darüber hinaus soll ein Verfahren zur Herstellung eines Rohres für eine solche Abgasbehandlungsvorrichtung beschrieben werden.

Diese Aufgaben werden gelöst durch die Abgasbehandlungsvorrichtung gemäß den Merkmalen des Anspruches 1 und durch ein Verfahren gemäß den Merkmalen des Anspruches 8. Weitere vorteilhafte Ausgestaltungen sind Gegenstand der jeweils abhängigen Ansprüche. Die dort angegebenen Merkmale können beliebig miteinander kombiniert werden. Die Beschreibung, insbesondere im Zusammenhang mit den Figuren, gibt weitere Ausführungsbeispiele an.

Die Erfindung betrifft eine Abgasbehandlungsvorrichtung aufweisend ein Gehäuse mit einer Querschnittsfläche und einer ersten Wandung, wobei sich durch die erste Wandung zumindest ein Rohr mit einer zweiten Wandung erstreckt und die zweite Wandung eine Perforierung aufweist.

Als "Rohr" wird hier insbesondere eine Strömungsleitung verstanden, die bevorzugt starr ist. Obwohl es für viele Anwendungsfälle ausreichen sollte, ein (metallisches) zylindrisches Rohr einzusetzen, ist das nicht zwingend erforderlich. So können auch gebogene und/oder (teilweise) flexible, sich verjüngende und/oder erweiternde Rohre vorgesehen sein. Das zumindest eine Rohr hat demnach insbesondere im Anschluss an den Eintritt in die Abgasbehandlungsvorrichtung eine Perforierung (Vielzahl von Poren, Öffnungen, Löcher,...), die (wenigstens teilweise) zu einer zwangsweisen Strömungsumlenkung des Abgases führt. Durch diese zwangsweise Strömungsumlenkung und die geeignet ausgestaltete Perforierung kann die Anströmung von Abgasbehandlungskomponenten in dem Gehäuse vergleichmäßigt werden. Insbesondere kann erreicht werden, dass die Abgasströmung an den Abgasbehandlungskomponenten einen höheren Gleichmaßindex (uniformity index) aufweist. Der Gleichmaßindex einer Strömung wird berechnet, indem zunächst eine mittlere Strömungsgeschwindigkeit über eine Querschnittsfläche berechnet wird. Dann werden für eine Vielzahl von lokalen Strömungsgeschwindigkeiten auf der Querschnittsfläche Abweichungen von dieser mittleren Strömungsgeschwindigkeit berechnet und mit der mittleren Strömungsgeschwindigkeit normiert. So ergeben sich für jede bestimmte Strömungsgeschwindigkeit lokale Ungleichmäßigkeitsindexe (local non-uniformity index). Die lokalen Ungleichförmigkeitsindexe werden aufsummiert und durch ihre Anzahl geteilt. So ergibt sich ein globaler Ungleichförmigkeitsindex. Aus diesem lässt sich mit folgender Formel der Gleichmaßindex berechnen:

$$u = 1 - \frac{\omega}{2}$$

Dabei ist u der Gleichmaßindex und $\omega$ der globale Ungleichförmigkeitsindex. Insgesamt ergibt sich der Gleichmaßindex, aus einer Vielzahl von lokalen Strömungsgeschwindigkeiten nach folgender Formel:

$$u = 1 - \frac{\left( \frac{1}{n} \sum_{i=1}^{n} \frac{v_i - \bar{v}}{\bar{v}} \right)}{2}$$

Dabei sind $v_i$ die lokalen Strömungsgeschwindigkeiten. Nach Möglichkeit sind die zur Berechnung des Gleichmaßindex verwendeten lokalen Strömungsgeschwindigkeiten möglichst gleichförmig über die zu untersuchende Querschnittsfläche verteilt.

Besonders vorteilhaft ist die erfindungsgemäße Abgasbehandlungsvorrichtung, wenn das Rohr eine erste Seite und eine zweite Seite hat und die Perforierung sich nur auf der ersten Seite des Rohres befindet. Mit einer Seite des Rohres ist regelmäßig ein Abschnitt der Umfangsfläche gemeint, wobei bevorzugt die erste Seite und die zweite Seite einander gegenüberliegen. Bevorzugt ist weiter, dass die Umfangsfläche des Rohres in genau zwei (gleich große) Abschnitte unterteilt wird, wobei dann die eine Seite keine Perforierung aufweist und die andere Seite eine Perforierung hat.

Weiter vorteilhaft ist die erfindungsgemäße Abgasbehandlungsvorrichtung, wenn in dem Gehäuse zumindest eine Abgasbehandlungskomponente angeordnet ist und die Perforierung nur auf einer von der Abgasbehandlungskomponente abgewandten ersten Seite des Rohres angeordnet ist. Dabei ist weiter bevorzugt, dass die Perforierung so ausgelegt ist, dass das Abgas nach Austritt aus den Perforierungen einer weiteren Strömungsumlenkung (z. B. aufgrund des Gehäuses) ausführt und dann besonders gleichmäßig der Abgasbehandlungskomponente zugeführt wird. Die Perforierung soll insbesondere so abgestimmt sein, dass unmittelbar vor dem Eintritt in die Abgasbehandlungskomponente ein für die üblichen Betriebsbedingungen überwiegend hoher Gleichmaßindex erreicht wird.

Besonders bevorzugt ist, dass die Abgasbehandlungskomponente einen metallischen Wabenkörper und/oder eine Trägeroberfläche mit katalytisch aktivem Material und/oder eine Partikelablagerungsschicht umfasst. Für die hier explizit angeführten Abgasbehandlungskomponenten ist eine gleichmäßige Beströmung durch das Abgas besonders wichtig, damit gleichmäßig gute Reinigungsergebnisse über die gesamte Abgasbehandlungskomponente erreicht werden, und folglich besonders kleine Abgasbehandlungskomponenten für die eingangs geschilderte schwierige Einbausituation eingesetzt werden können.

Auch vorteilhaft ist die erfindungsgemäße Abgasbehandlungsvorrichtung, wenn die Perforierung an die Querschnittsfläche und/oder Form des Gehäuses angepasst ist. Hiermit ist insbesondere gemeint, dass die Anordnung, Größe, Form, Gestalt, Art, etc. der die Perforierung bildenden Poren, Öffnungen, Löcher,... unterschiedlich ausgeführt ist, bzw. den Abstand und/oder die Orientierung der Perforierung zum Gehäuse berücksichtigt und folglich eine ausgerichtete Strömung des Abgases erreicht wird. Eine gleichartige Anpassung kann beispielsweise auch an die Form, Ausrichtung, Art des Rohres und/oder der Abgasbehandlungskomponenten vorgenommen sein.

Die erfindungsgemäße Abgasbehandlungsvorrichtung kann mit einer Zugabe für ein Additiv ausgeführt sein, wobei diese Zugabe des Additivs mit einer Steuerung betrieben werden kann, die bevorzugt so implementiert ist, dass das System mit einer minimalen Anzahl an Eingangsgrößen vom Motor auskommt. Es kann genügen, Informationen über Last und Drehzahl über den CAN-Bus der Verbrennungskraftmaschine des Wasserfahrzeuges zu erhalten. Die erfindungsgemäße Abgasbehandlungsvorrichtung kann insbesondere auch so betrieben werden, dass vollständig auf Informationen aus dem CAN-Bus des Motors des Wasserfahrzeuges verzichtet wird. Dann erfolgt eine Regelung bzw. Steuerung der erfindungsgemäßen Abgasbehandlungsvorrichtung nur mit den Informationen, die von Sensoren in der Abgasbehandlungsvorrichtung gewonnen werden sowie gegebenenfalls mit dem Signal eines in der Ansaugleitung der Verbrennungskraftmaschine des Wasserfahrzeuges angeordneten Luftmassensensors.

Weiterhin erfindungsgemäß ist ein Verfahren zur Herstellung eines Rohres mit einer Perforierung für eine erfindungsgemäße Abgasbehandlungsvorrichtung aufweisend zumindest die folgenden Schritte:

a) Positionieren des Rohres in dem Gehäuse,
b) Unterteilen der Querschnittsfläche des Gehäuses in Segmente,
c) Unterteilen des Rohres in Längenabschnitte,

d) Zuordnen der Segmente zu den Längenabschnitten, und

e) Berechnen einer geeigneten Perforierung für jeden Längenabschnitt in Abhängigkeit der Segmente.

Die Perforierung des Rohres ist vorzugsweise durch eine Vielzahl von Öffnungen bzw. Löchern in der Wandung des Rohres gebildet. Die Öffnungen bzw. Löcher können unterschiedlich geformt sein, beispielsweise nach Art von runden Bohrungen, Rechtecken, Quadraten, Dreiecken oder Schlitzen. Bevorzugt ist allerdings, wenn die Öffnungen nach Art von runden Bohrungen geformt sind.

Die Öffnungen können mit unterschiedlichen Herstellungsverfahren hergestellt werden, wie beispielsweise Bohren, Stanzen, Schneiden oder Pressen.

Besonders vorteilhaft ist das Verfahren, wenn vor Schritt e) die Gesamtanzahl der Löcher der Perforierung festgelegt wird und in Schritt e) eine geeignete Verteilung der Löcher auf die einzelnen Längsabschnitte des Rohres berechnet wird.

Zur Durchführung des erfindungsgemäßen Verfahrens zur Erstellung der geeigneten Perforierung in dem Rohr wird zunächst angenommen, dass der Druckverlust bei der Einströmung des Abgases in die Abgasbehandlungsvorrichtung sich in drei Teildruckverluste aufteilt. Der erste Teildruckverlust ist der Druckverlust der Innenströmung in dem perforierten Rohr. Der zweite Teildruckverlust ist der Druckverlust bei der Durchströmung der Perforation und der dritte Druckverlust ist durch die Innenströmung in einer Vorkammer im Gehäuse vor einer Abgasbehandlungskomponente bedingt. Der erste Teildruckverlust und der dritte Teildruckverlust werden durch analytische Beziehungen abgeschätzt, zum Beispiel über die Druckverlustformel für die Berechnung von Strömungen in geraden Rohren.

Der gesamte Massenstrom wird nun auf eine vorgegebene Anzahl von Löchern der Perforation umgerechnet. Damit ergibt sich ein Massenstrom pro Loch. Dieser Massenstrom wird eingesetzt, um die Lochgröße zu bestimmen. Dazu wird die analytische Druckverlustformel für den Durchgang durch eine Lochblende verwendet, womit ein Zieldruckverlust für den zweiten Teildruckverlust vorgegeben wird. Aus dem Zieldruckverlust für den zweiten Druckverlust und der vorgegebenen Anzahl der Löcher wird der benötigte Lochdurchmesser bestimmt. Der Zieldruckverlust für den zweiten Druckverlust bei der Durchströmung der Perforation wird so festgelegt, dass der Zieldruckverlust der dominante Druckverlust bei der Einströmung in die Abgasbehandlungsvorrichtung ist. Vorzugsweise wird der Zieldruckverlust so gewählt, dass der Zieldruckverlust bzw. der zweite Druckverlust viermal so groß ist wie der erste Druckverlust und der dritte Druckverlust zusammen. Unter diesen getroffenen Annahmen kann davon ausgegangen werden, dass jedes Loch von einem gleichen Massenstrom durchströmt wird und der sich einstellende Gegendruck bei jedem Loch gleich groß ist. Hierdurch kann die Strömungsverteilung in der Vorkammer der erfindungsgemäßen Abgasbehandlungsvorrichtung über die Positionierung der Löcher auf der Längsachse des perforierten Rohres beeinflusst werden. Zur Bestimmung der Ausgestaltung und/oder Positionierung der Löcher auf dem perforierten Rohr wird nun der Querschnitt der Abgasbehandlungsvorrichtung entlang des Rohres in streifenförmige Segmente (Seitenabschnitte) eingeteilt, die jeweils eine Fläche aufweisen. Für die ideale Anströmung der Abgasbehandlungskomponente hinter der Vorkammer ist es erforderlich, dass die Strömungsgeschwindigkeiten auf den Streifen jeweils identisch sind. Dazu muss der Massenstrom für jedes Segment direkt mit der Fläche des Segmentes skaliert sein. Die Löcher der Perforierung werden dementsprechend gemäß den Flächen der Segmente der Querschnittsfläche verteilt.

Besonders bevorzugt ist, dass durch die Strömungsführung in der erfindungsgemäßen Abgasbehandlungsvorrichtung ein Gleichmaßindex der Anströmung der Abgasbehandlungskomponente in der Abgasbehandlungsvorrichtung von zumindest 0,9, vorzugsweise mehr als 0,95, erreicht wird.

Diese Effekte können auch zur Vermischung bzw. Vergleichmäßigung eines Abgas-Additiv-Gemisches, welches durch das perforierte Rohr hindurch geführt wird, genutzt werden.

Weiterhin erfindungsgemäß ist ein Wasserfahrzeug aufweisend zumindest eine Verbrennungskraftmaschirie und zumindest eine erfindunggemäße Abgasbehandlungsvorrichtung zur Reinigung der Abgase der zumindest einen Verbrennungskraftmaschine.

Die für die erfindungsgemäße Abgasbehandlungsvorrichtung, das erfindungsgemäße Wasserfahrzeug, und das erfindungsgemäße Verfahren geschilderten besonderen Vorteile und Ausgestaltungsmerkmale sind in analoger Weise jeweils aufeinander übertragbar.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf die diese jedoch nicht beschränkt ist. Verschiedene Merkmale aus unterschiedlichen Figuren können selbstverständlich ebenfalls in beliebiger Weise miteinander kombiniert werden. Die Figuren zeigen schematisch:

Fig. 1: eine erste Ausführungsvariante einer erfindungsgemäßen Abgasbehandlungsvorrichtung,

Fig. 2: einen Querschnitt durch eine erste Ausführungsvariante einer erfindungsgemäßen Abgasbehandlungsvorrichtung,

Fig. 3: einen Querschnitt durch eine zweite Ausführungsführungsvariante einer erfindungsgemäßen Abgasbehandlungsvorrichtung,

Fig. 4: ein Modul, welches innerhalb einer erfindungsgemäßen Abgasbehandlungsvorrichtung eingesetzt werden kann,

Fig. 5:   eine dritte Ausführungsvariante einer erfindungsgemäßen Abgasbehandlungsvorrichtung, und

Fig. 6:   ein Wasserfahrzeug mit einer erfindungsgemäßen Abgasbehandlungsvorrichtung.

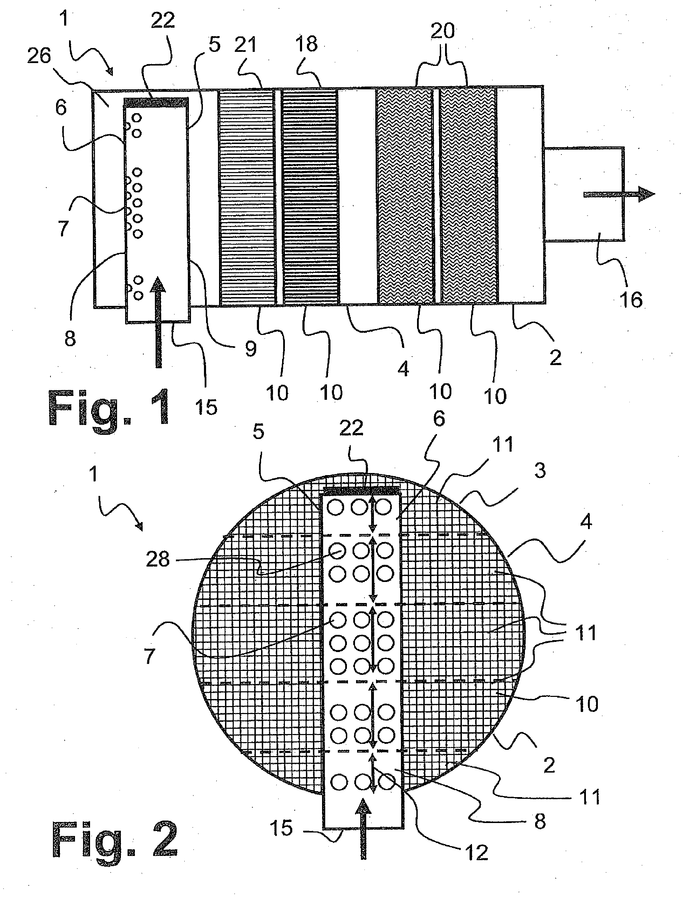

In Fig. 1 ist eine erfindungsgemäße Abgasbehandlungsvorrichtung 1 dargestellt. Die Abgasbehandlungsvorrichtung 1 weist ein Gehäuse 2 mit einer Querschnittsfläche 3 und einer ersten Wandung 4 auf. Durch die erste Wandung 4 hindurch erstreckt sich ein zylindrisches und metallisches Rohr 5. Das Rohr 5 bildet einen Einlass 15 in die Abgasbehandlungsvorrichtung 1. Darüber hinaus hat die Abgasbehandlungsvorrichtung 1 einen Auslass 16. Die Abgasbehandlungsvorrichtung 1 ist vom Einlass 15 zum Auslass 16 für ein Abgas durchströmbar, wobei die dort verbauten Elemente den dort herrschenden Bedingungen gewachsen sind (hochtemperaturfest, korrosionsbeständig, etc). Die Durchströmung der Abgasbehandlungsvorrichtung 1 ist mit Hilfe von Pfeilen schematisch angedeutet. Ausgehend vom Einlass 15 befinden sich in der Abgasbehandlungsvorrichtung 1 hintereinander eine Vorkammer 26 und eine Reihe von Abgasbehandlungskomponenten 10. Die erste Abgasbehandlungskomponente 10 hinter der Vorkammer 26 ist ein Mischelement (z. B. ein Wabenkörper mit einer Vielzahl von Strömungsumlenkungen zur Vermischung der Teilströme in benachbarten Kanälen), welcher zur Durchmischung der Abgase dient. Darauf folgt ein Hydrolysekatalysator 18 zur Umsetzung eines der Abgasbehandlungsvorrichtung 1 stromaufwärts des Einlasses 15 zugeführten Reduktionsmittels.

Anschließend ist ein SCR-Katalysator 20 vorgesehen, welcher hier in zwei einzelne Abgasbehandlungskomponenten 10 aufgeteilt ist.

Das Rohr 5 erstreckt sich zumindest teilweise in die Vorkammer 26 der Abgasbehandlungsvorrichtung 1. In dem Rohr 5 ist eine Perforierung 7 vorgesehen, so dass durch den Einlass 15 eintretendes Abgas in die Vorkammer 26 gelangen kann. Das Rohr 5 hat eine erste Seite 8 und eine zweite Seite 9. Die erste Seite 8 ist von der ersten Abgasbehandlungskomponente 10 in der Abgasbehandlungsvorrichtung 1 abgewandt. Die zweite Seite 9 ist der ersten Abgasbehandlungskomponente 10 in der Abgasbehandlungsvorrichtung 1 zugewandt. Die Perforierung 7 befindet sich nur auf der ersten Seite 8. Das Rohr 5 weist an dem in dem Gehäuse 2 liegenden Ende einen Verschluss 22 auf, damit aus dem Rohr 5 in die Vorkammer 26 tretendes Abgas durch die Perforierung 7 des Rohres 5 fließen muss.

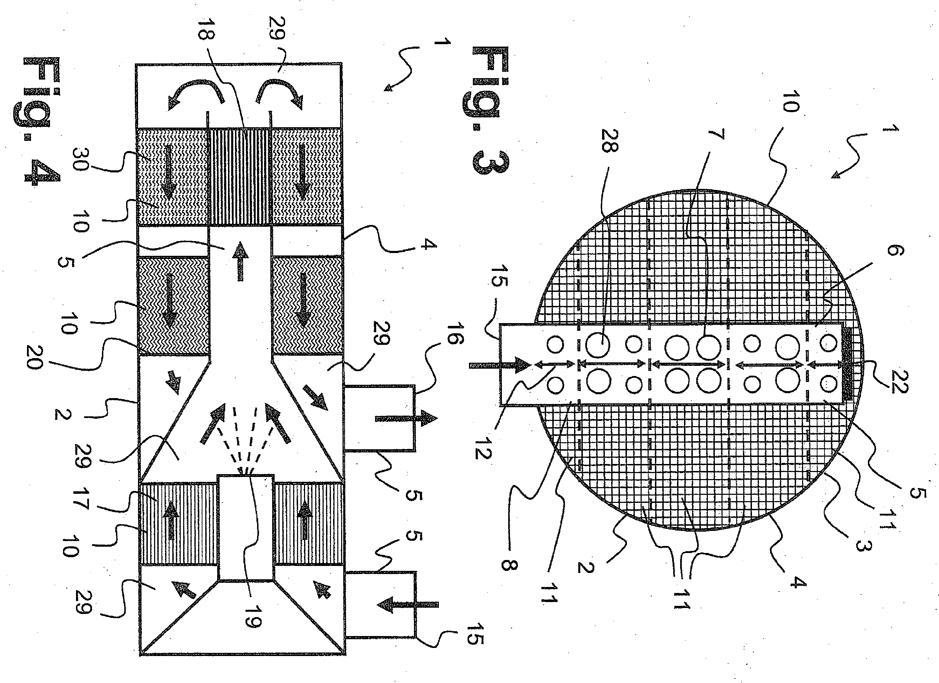

In den in den Fig. 2 und 3 dargestellten Querschnitten einer ersten Ausführungsvariante und einer zweiten Ausführungsvariante der erfindungsgemäßen Abgasbehandlungsvorrichtung 1 ist jeweils die Perforierung 7 des Rohres 5 zu erkennen. Die Fig. 2 und 3 weisen viele gemeinsame Bezugszeichen auf, so dass diese Figuren hier zunächst gemeinsam erläutert werden. In beiden Figuren ist jeweils die erste Seite 8 des Rohres 5 vor der ersten Abgasbehandlungskomponente 10 in der Abgasbehandlungsvorrichtung 1 zu sehen. Das Rohr 5 bildet an dem einen stirnseitigen Ende den Einlass 15 in die Abgasbehandlungsvorrichtung 1 und es ist an dem gegenüberliegenden stirnseitigen Ende mit dem Verschluss 22 verschlossen. Das Rohr 5 weist eine Perforierung 7 auf. Die Perforierung 7 ist an die Querschnittsfläche 3 der Abgasbehandlungsvorrichtung 1 angepasst.

Zur Anpassung der Perforierung 7 ist die Querschnittsfläche 3 in Segmente 11 unterteilt, während das Rohr 5 in Längsabschnitte 12 unterteilt ist. Jeder Längsabschnitt 12 kann dabei einem Segment 11 zugeordnet werden. Die Zuordnung ergibt sich im hier dargestellten Fall dadurch, dass das Rohr 5 die Querschnittsfläche 3 in einer Richtung überspannt und die Segmente 11 der Querschnittsfläche 3 jeweils senkrecht zu dem Rohr 5 bzw. zu der Richtung des Rohres festgelegt sind. Die Längsabschnitte 12 sind dann jeweils die Bereiche des Rohres 5, die in bestimmten Segmenten 11 liegen. Die Perforierung 7 ist nun in den einzelnen Längsabschnitten 12 an die Segmente 11 angepasst. Vorzugsweise ist die Perforierung 7 jeweils an die Fläche der Segmente 11 angepasst. Die Perforierung 7 ist regelmäßig durch eine Vielzahl von Löchern 28 gebildet. Auch die Löcher 28 weisen eine Fläche auf. Vorzugsweise ist zur Anpassung der Perforierung 7 an die Segmente 11 die Gesamtfläche der Löcher 28 jeweils an die Fläche der Segmente 11 angepasst. Vorzugsweise ist die Gesamtfläche der Löcher 28 in jedem Längsabschnitt 12 jeweils proportional zu der Fläche des zugeordneten Segmentes 11. Dazu ist in Fig. 2 die Anzahl der Löcher 28, welche die Perforierung 7 bilden, in den einzelnen Längsabschnitten 12 des Rohres 5 angepasst. In Fig. 3 ist zusätzlich die Größe der einzelnen Löcher 28 der Perforierung 7 angepasst. Dies stellt zur Anpassung der Zahl der Löcher eine Alternative dar. Die Anpassung der Zahl der Löcher und die Anpassung der Größe der Löcher können im Rahmen der Erfindung auch kombiniert werden.

Fig. 4 zeigt eine besondere Abgasbehandlungsvorrichtung 1, die innerhalb eines Abgasbehandlungssystems zusammen mit einer erfindungsgemäßen Abgasbehandlungsvorrichtung 1 besonders vorteilhaft eingesetzt werden kann. Gleichwohl kann eine derartige Abgasbehandlungsvorrichtung 1 ggf. auch unabhängig von der Ausgestaltung des Rohres (z. B. ohne eine Perforierung) eine Erfindung darstellen.

Auch diese Abgasbehandlungsvorrichtung 1 weist ein Gehäuse 2 mit einem Einlass 15 für das Abgas einer Verbrennungskraftmaschine sowie einen Auslass 16 für gereinigtes Abgas auf. Die Abgasbehandlungsvorrichtung 1 gemäß der Fig. 4 wird entsprechend den Pfeilen in der Fig. von dem Abgas durchströmt. Ausgehend von dem Einlass 15 durchströmt das Abgas zunächst eine ringförmige Abgasbehandlungskomponente 10.

Von dem Einlass 15 wird das Abgas von einem Umlenkbereich 29 in diese Abgasbehandlungskomponente 10 gelenkt. Die erste Abgasbehandlungskomponente 10 ist ein Oxidationskatalysator 17. Innerhalb eines Hohlraumes in der ringförmigen Abgasbehandlungskomponente 10 ist eine Reduktionsmittelzufuhr 19 vorgesehen. An die Abgasbehandlungskomponente 10 schließt sich ein erneuter Umlenkbereich 29 an, durch welchen das Abgas in ein Rohr 5 gelenkt wird. Die Reduktionsmittelzufuhr 19 sprüht nunmehr (flüssiges) Reduktionsmittel (z. B. eine Harnstoff-Wasser-Lösung) in den Umlenkbereich 29 hinter dem Oxidationskatalysator 17, so dass dort eine Vermischung stattfindet, die insbesondere durch die konusförmige Verengung begünstigt wird. Das Rohr 5 erstreckt sich durch mehrere weitere ringförmige Abgasbehandlungskomponenten 10 bis hin in einen weiteren Umlenkbereich 29. In dem Rohr ist auch ein Hydrolysekatalysator 18 vorgesehen, vorzugsweise konzentrisch zur letzten/ersten Abgasbehandlungskomponenten 10 gegenüberliegend zum Einlass 15. In dem Umlenkbereich 29 hinter dem Rohr 5 wird das Abgas erneut umgelenkt, so dass es die soeben erwähnten weiteren ringförmigen Abgasbehandlungskomponenten 10 passiert. Die erste weitere ringförmige Abgasbehandlungskomponente 10 in Durchströmungsrichtung ist ein Partikelabscheider 30, insbesondere ein so genannter offener Filter, der mit metallischen Wellfolien und metallischen Vliesen gebildet ist. Dabei hat die metallische Wabenstruktur bevorzugt eine Vielzahl von Umlenkungen, so dass einerseits erneut eine gründliche Durchmischung der Abgasströmung erreicht werden kann und andererseits durch diese Umlenkungen die Ablagerungen von Partikeln begünstigt werden. Die zweite weitere ringförmige Abgasbehandlungskomponente 10 bildet einen SCR-Katalysator 20. Zuletzt folgt ein erneuter Umlenkbereich 29, welcher das nunmehr gereinigte Abgas in Richtung zum Auslass 16 der Abgasbehandlungsvorrichtung gemäß Fig. 4 führt. Der Einlass 15 sowie der Auslass 16 sind jeweils von einem Rohr 5 gebildet. Diese Rohre können sich zumindest teilweise durch die Wandung 4 des Gehäuses 2 der Abgasbehandlungsvorrichtung 1 erstrecken. Es ist möglich, dass die Rohre 5 von Einlass 15 und Auslass 16 entsprechend der hier behandelten Erfindung auch mit einer Perforierung versehen sind. Gleiches gilt für das Rohr 5, welches sich durch die ringförmigen Abgasbehandlungskomponenten 10 hindurch erstreckt, wobei die Perforierung z. B. am dem Einlass 15 gegenüberliegenden Bereich des Gehäuses 2 vorgesehen ist, der durch die letzte Abgasbehandlungskomponenten 10 hindurch überstehend ausgebildet ist.

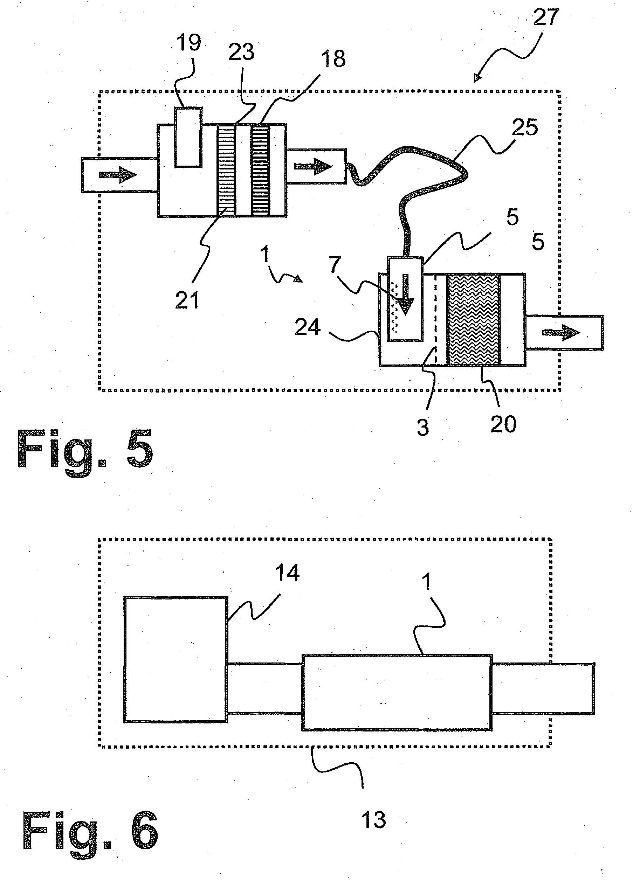

In Fig. 5 ist ein Abgasbehandlungssystem 27 dargestellt, welches ein erstes Modul 23 und ein zweites Modul 24 aufweist. Das Abgas gelangt zunächst in das erste Modul 23, um dann über eine beliebig geformte Verbindungsleitung 25 (die auch als Rohr ausgeführt sein kann) in das zweite Modul 24 zu gelangen. Die Strömung des Abgases durch das erste Modul 23 und das zweite Modul 24 ist jeweils mit Pfeilen angedeutet. Das zweite Modul 24 ist in besonders vorteilhafter Weise als erfindungsgemäße Abgasbehandlungsvorrichtung 1 mit einem Rohr 5 mit einer Perforierung 7 ausgestaltet. Hierdurch kann erreicht werden, dass die durch die beliebige Führung der Verbindungsleitung 25 veränderte Abgasströmung beim Eintritt in das zweite Modul 24 vergleichmäßigt wird bzw. sich gleichmäßig über die Querschnittsfläche 3 des zweiten Moduls 24 verteilt. Vorzugsweise ist im ersten Modul 23 eine Reduktionsmittelzufuhr 19 (z. B. für eine Harnstoff-Wasser-Lösung) vorgesehen. Zusätzlich können im ersten Modul 23 auch ein Hydrolysekatalysator 18 sowie ein (ggf. beschichtetes) Mischelement 21 vorgesehen sein. So kann sichergestellt werden, dass das erste Modul 23 eine Abgasströmung verlässt, welche gleichmäßig mit vollständig hydrolysiertem und verdampftem Reduktionsmittel (Ammoniak) beladen ist. Die Umsetzung der Schadstoffbestandteile im Abgas mit dem Reduktionsmittel erfolgt dann im zweiten Modul 24. Durch diese Ausgestaltung kann erreicht werden, dass das Abgasbehandlungssystem 27 für ein Wasserfahrzeug an den zur Verfügung stehenden Platz im Wasserfahrzeug angepasst werden kann. Die Verbindungsleitung 25 kann individuell angepasst werden. Vorzugsweise ist die Verbindungsleitung zwischen 1 und 20 m lang und wird über ihre gesamte Länge um mehr als 90°, vorzugsweise mehr als 360°, umgelenkt. Die Führung des Abgases mit dem Rohr 5 mit der Perforation 7 erlaubt es, eine aufgrund des Verlaufs der Verbindungsleitung 25 möglicherweise ungleiche Abgasströmung zumindest teilweise wieder zu vergleichmäßigen.

Fig. 6 zeigt ein Wasserfahrzeug 13 aufweisend eine Verbrennungskraftmaschine 14 sowie eine erfindungsgemäße Abgasbehandlungsvorrichtung 1 zur Reinigung der Abgase der Verbrennungskraftmaschine 14.

Bezugszeichenliste

| | |
|---|---|
| 1 | Abgasbehandlungsvorrichtung |
| 2 | Gehäuse |
| 3 | Querschnittsfläche |
| 4 | erste Wandung |
| 5 | Rohr |
| 6 | zweite Wandung |
| 7 | Perforierung |
| 8 | erste Seite |
| 9 | zweite Seite |
| 10 | Abgasbehandlungskomponente |
| 11 | Segment |
| 12 | Längsabschnitt |
| 13 | Wasserfahrzeug |
| 14 | Verbrennungskraftmaschine |
| 15 | Einlass |
| 16 | Auslass |
| 17 | Oxidationskatalysator |
| 18 | Hydrolysekatalysator |
| 19 | Reduktionsmittelzufuhr |

20   SCR-Katalysator
21   Mischelement
22   Verschluss
23   erstes Modul
24   zweites Modul
25   Verbindungsleitung
26   Vorkammer
27   Abgasbehandlungssystem
28   Loch
29   Umlenkbereich
30   Partikelabscheider

**Patentansprüche**

1.  Abgasbehandlungsvorrichtung (1) aufweisend ein Gehäuse (2) mit einer Querschnittsfläche (3) und einer ersten Wandung (4), wobei sich durch die erste Wandung (4) zumindest ein Rohr (5) mit einer zweiten Wandung (6) erstreckt und die zweite Wandung (6) eine Perforierung (7) aufweist, **dadurch gekennzeichnet, dass** die Perforierung (7) an die Querschnittsfläche (3) und/oder Form des Gehäuses (2) derart angepasst ist, dass das Rohr (5) in Längsabschnitte (12) und die Ouerschnittsfläche (3) des Gehäuses (2) in Segmente (11) unterteilt sind und die Perforierung (7) für jeden Längsabschnitt (12) des Rohres in Abhängigkeit der Segmente (11) geeignet ausgerührt ist, so dass eine Anströmung von Abgasbehandlungskomponenten (10) in dem Gehäuse (2) vergleichmäßigt ist.

2.  Abgasbehandlungsvorrichtung (1) nach Anspruch 1, wobei die Perforierung (7) durch Anordnung, Größe oder Form der die Perforierung(7) bildenden Poren, Öffnungen oder Löcher unterschiedlich <u>aus</u>geführt ist.

3.  Abgasbehandlungsvorrichtung (1) nach Anspruch 1 oder 2, wobei die Anpassung der Perforierung (7) durch Form, Ausrichtung oder Art des Rohres (5) vorgenommen ist.

4.  Abgasbehandlungsvorrichtung (1) nach einem der vorhergehenden Ansprüche, wobei das Rohr (5) in Segmente (11) mit einer jeweiligen Fläche unterteilt ist und wobei die Perforierung, (7) in Längsabschnitte (12) unterteilt ist die einem jeweiligen Segment (11) zugeordnet sind, und die Perforierung (7) durch eine Vielzahl von Löchern (28) gebildet ist, die in einem jeweiligen Längsabschnitt (12) eine Gesamtfläche bilden. wobei die Gesamtfläche der Löcher (28) in jedem Längsabschnitt (12) zu der Fläche des zugeordneten Segments (11) proportional ist.

5.  Abgasbehandlungsvorrichtung (1) nach einem der vorhergehenden Ansprüche, wobei das Rohr (5) eine erste Seite (8) und eine zweite Seite (9) hat und die Perforierung (7) sich nur auf der ersten Seite (8) des Rohres (5) befindet.

6.  Abgasbehandlungsvorrichtung (1) nach einem der vorhergehenden Ansprüche, wobei in dem Gehäuse (2) zumindest eine Abgasbehandlungskomponente (10) angeordnet ist und die Perforierung (7) nur auf einer von der Abgasbehandlungskomponente (10) abgewandten ersten Seite (8) des Rohres (5) angeordnet ist.

7.  Abgasbehandlungsvorrichtung (1) nach einem der vorhergehenden Ansprüche, wobei die Perforierung (7) an die Querschnittsfläche (3) und/oder Form des Gehäuses (2) angepasst ist.

8.  Verfahren zur Herstellung eines Rohres (5) mit Perforierung (7) für eine Abgasbehandlungsvorrichtung (1) nach einem der vorhergehenden Ansprüche aufweisend zumindest die folgenden Schritte:

    a) Positionieren des Rohres (5) in dem Gehäuse (2),
    b) Unterteilen der Querschnittsfläche (3) des Gehäuses (2) in Segmente (11),
    c) Unterteilen des Rohres (5) in Längsabschnitte (12),
    d) Zuordnen der Segmente (11) zu den Längsabschnitten (12), und
    e) Berechnen einer geeigneten Perforierung (7) für jeden Längsabschnitt (12) in Abhängigkeit der Segmente (11).

9.  Wasserfahrzeug (13) aufweisend zumindest eine Verbrennungskraftmaschine (14) und zumindest eine Abgasbehandlungsvorrichtung (1) nach einem der Ansprüche 1 bis 7 zur Reinigung der Abgase der zumindest einen Verbrennungskraftmaschine (14).

**Claims**

1.  Exhaust gas treatment device (1) comprising a housing (2) having a cross-sectional area (3) and a first wall (4), wherein at least one tube (5) having a second wall (6) extends through the first wall (4), and the second wall (6) has a perforation (7), **characterized in that** the perforation (7) is adapted to the cross-sectional area (3) and/or the shape of the housing (2) in such a way that the tube (5) is divided into longitudinal sections (12) and the cross-sectional area (3) of the housing (2) is divided into segments (11), and the perforation (7) is suitably configured for each longitudinal section (12) in accordance with the segments (11), so that an approach flow to exhaust gas treatment components (10) in the housing (2) is made uniform.

**2.** Exhaust gas treatment device (1) according to claim 1, wherein the perforation (7) is embodied differently by means of the arrangement, size or shape of the pores, openings or holes forming the perforation (7).

**3.** Exhaust gas treatment device (1) according to claim 1 or 2, wherein the adaption of the perforation (7) is carried out by means of the shape, alignment or type of the tube (5).

**4.** Exhaust gas treatment device (1) according to one of the preceding claims, wherein the tube (5) is divided into segments (11) each having an area and wherein the perforation (7) is divided in longitudinal sections (12) which are associated with a respective segment (11), and the perforation (7) is formed by a multiplicity of holes (28) which form a total area in a respective longitudinal section (12), wherein the total area of holes (28) in each longitudinal section (12) is proportional to the area of the associated segment (11).

**5.** Exhaust gas treatment device (1) according to one of the preceding claims, wherein the tube (5) has a first side (8) and a second side (9), and the perforation (7) is situated only on the first side (8) of the tube (5).

**6.** Exhaust gas treatment device (1) according to one of the preceding claims, wherein at least one exhaust gas treatment component (10) is arranged in the housing (2), and the perforation (7) is arranged only on a first side (8) of the tube (5), which faces away from the exhaust gas treatment component (10).

**7.** Exhaust gas treatment device (1) according to one of the preceding claims, wherein the perforation (7) is adapted to the cross-sectional area (3) and/or the shape of the housing (2).

**8.** Method for producing a tube (5) with perforation (7) for an exhaust gas treatment device (1) according to one of the preceding claims, having at least the following steps:

a) positioning of the tube (5) in the housing (2),
b) dividing the cross-sectional area (3) of the housing (2) into segments (11),
c) dividing the tube (5) into longitudinal sections (12),
d) allocation of the segments (11) to the longitudinal sections (12), and
e) calculation of a suitable perforation (7) for each longitudinal section (12) in accordance with the segments (11).

**9.** Watercraft (13) having at least one internal combustion engine (14) and at least one exhaust gas treatment device (1) according to one of the claims 1 to 7 for purifying the exhaust gases of the at least one internal combustion engine (14).

**Revendications**

**1.** Dispositif de traitement de gaz d'échappement (1) présentant un boîtier (2) avec une surface en section transversale (3) et une première paroi (4), au moins un tube (5) s'étendant à travers la première paroi (4) avec une deuxième paroi (6) et la deuxième paroi (6) présentant une perforation (7), **caractérisé en ce que** la perforation (7) est adaptée à la surface en section transversale (3) et/ou à la forme du boîtier (2) de telle sorte que le tube (5) soit divisé en portions longitudinales (12) et que la surface en section transversale (3) du boîtier (2) soit divisée en segments (11) et la perforation (7) est réalisée de manière appropriée pour chaque portion longitudinale (12) du tube en fonction des segments (11) de telle sorte qu'un afflux de composants de traitement des gaz d'échappement (10) dans le boîtier (2) soit uniformisé.

**2.** Dispositif de traitement de gaz d'échappement (1) selon la revendication 1, dans lequel la perforation (7) est réalisée de manière différente en ce qui concerne l'agencement, la dimension ou la forme des pores, des orifices ou des trous formant la perforation (7).

**3.** Dispositif de traitement de gaz d'échappement (1) selon la revendication 1 ou 2, dans lequel l'adaptation de la perforation (7) est effectuée par rapport à la forme, l'orientation ou au type de tube (5).

**4.** Dispositif de traitement de gaz d'échappement (1) selon l'une quelconque des revendications précédentes, dans lequel le tube (5) est divisé en segments (11) ayant une surface respective et dans lequel la perforation (7) est divisée en portions longitudinales (12) qui sont associées à un segment respectif (11), et la perforation (7) est formée par une pluralité de trous (28) qui forment dans une portion longitudinale respective (12) une surface d'ensemble, la surface d'ensemble des trous (28) étant proportionnelle dans chaque portion longitudinale (12) à la surface du segment associé (11).

**5.** Dispositif de traitement de gaz d'échappement (1) selon l'une quelconque des revendications précédentes, dans lequel le tube (5) présente un premier côté (8) et un deuxième côté (9) et la perforation (7) se trouve seulement sur le premier côté (8) du tube (5).

**6.** Dispositif de traitement de gaz d'échappement (1) selon l'une quelconque des revendications précédentes, dans lequel, dans le boîtier (2), est disposé au moins un composant de traitement de gaz d'échappement (10) et la perforation (7) est seulement disposée sur un premier côté (8) du tube (5) opposé au composant de traitement de gaz d'échappement (10).

7. Dispositif de traitement de gaz d'échappement (1) selon l'une quelconque des revendications précédentes, dans lequel la perforation (7) est adaptée à la surface en section transversale (3) et/ou à la forme du boîtier (2).

8. Procédé de fabrication d'un tube (5) avec une perforation (7) pour un dispositif de traitement de gaz d'échappement (1) selon l'une quelconque des revendications précédentes, comprenant au moins les étapes suivantes :

   a) positionnement du tube (5) dans le boîtier (2),
   b) division de la surface en section transversale (3) du boîtier (2) en segments (11),
   c) division du tube (5) en portions longitudinales (12),
   d) affectation des segments (11) aux portions longitudinales (12), et
   e) calcul d'une perforation appropriée (7) pour chaque portion longitudinale (12) en fonction des segments (11).

9. Bateau (13) présentant au moins un moteur à combustion interne (14) et au moins un dispositif de traitement de gaz d'échappement (1) selon l'une quelconque des revendications 1 à 7, pour la purification des gaz d'échappement de l'au moins un moteur à combustion interne (14).

## Fig. 1

## Fig. 2

**Fig. 3**

**Fig. 4**

**Fig. 5**

**Fig. 6**

**EP 2 580 440 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030051449 A1